# EUROPEAN PATENT SPECIFICATION

(11) **EP 1 887 320 B1**
(45) Date of publication and mention of the grant of the patent: **14.12.2011**
(21) Application number: 07013764.1
(22) Date of filing: 13.07.2007
(51) Int. Cl.: G01C 21/32, G08G 1/0967

(54) **Map information processing apparatus, control method for a map information processing apparatus, control program for a map information processing apparatus, and a recording medium for recording a control program for a map information processing apparatus**
Kartendatenverarbeitungsvorrichtung, Steuerverfahren für eine Kartendatenverarbeitungsvorrichtung, Steuerprogramm für eine Kartendatenverarbeitungsvorrichtung und Aufzeichnungsmedium zum Aufzeichnen eines Kontrollprogramms für eine Kartendatenverarbeitungsvorrichtung
Appareil de traitement d'informations cartographiques, procédé de commande pour un appareil de traitement d'informations cartographiques, programme de commande pour un appareil de traitement d'informations cartographiques, et support d'enregistrement pour enregistrer un programme de commande pour un appareil de traitement d'informations cartographiques

(30) Priority: 31.07.2006 JP 2006208769
(43) Date of publication of application: 13.02.2008
(73) Proprietor: Pioneer Corporation, Kanagawa 212-0031 (JP); Increment P Corporation, Kanagawa 210-0024 (JP)
(72) Inventor: Koizumi, Isao, Tokyo (JP)
(74) Representative: Tappe, Hartmut

(56) References cited:
- EP-A- 1 555 511
- WO-A-2007/054180

## Description

### 1. Field of the Invention

The present invention relates to an information processing system of information such as navigation information.

### 2. Description of a Related Art

A prior car navigation apparatus is known that has functions, for example, of detecting the current position from GPS as the automobile travels, providing positional guidance by displaying that current position on a display together with a road map, setting a suitable route from the current location to the target destination, and performing guidance for the specified route so that the automobile can travel that route to the target destination.

Moreover, these guidance functions are made possible by using road map data that is recorded on a recording medium such as a HD (Hard Disc), DVD (Digital Versatile Disc) or the like, or that is supplied over a communication line.

However, roads undergo maintenance and improvement daily, and new roads are constructed, so road map data that are stored on a recording medium such as a HD, DVD or the like change over time from the instant that the recording medium is obtained by the user. Therefore, it is necessary that obtained road map data be frequently updated in order that the data reflect the latest road conditions. By neglecting to update the data, problems occur such as providing guidance for a prior longer route even though a shorter route has been newly opened, or providing guidance for a route that passes over closed roads.

Therefore, there is a map information provider service that assigns a constant link ID to an object such as a link made up of roads and makes it possible to update information in object units (as disclosed in Japanese patent application 2004-287705, for example).

Also, a map information provider service is known in which the distance of a route searched out by a car navigation apparatus is transmitted to a server and is compared with the result of calculating the same route by the server, and when the results differ, updates the road information for car navigation (as disclosed in Japanese patent application 2006-065246, for example).

However, in Japanese patent application 2004-287705, there is no mention regarding the selection of the road information to be updated. Also, in Japanese patent application 2006-065246, road information is updated in unit divisions of roads, so unneeded information that is included in a division is also updated. In other words, in these prior navigation apparatuses, it is possible to update the roads along a route in object units, however, there are problems in that it is not possible to set how far to update the roads that are necessary for route calculation, and it is not possible to identify a road that will affect the route calculation. Also, there is a problem in that memory for storing extra road information that is not necessary for route calculation is necessary, and processing time is required for processing the extra road information.

In document EP 1 555 511 it is disclosed a method and an apparatus for a communication-type navigation system, wherein a central server receives information of a current location and a destination location from an on-vehicle terminal (navigation system). The central server searches a travelling route between a current location and the destination and transmits travelling route information including travelling route, guidance information and plural map information blocks, into which map information on the travelling route is divided, to the on-vehicle terminal. The described system relates to a communication-type system for navigation, which depends on a full download of relevant map data. Hence, the described navigation system comprises an on-vehicle terminal, which does not hold map information on its own, i.e. the navigation system is solely based on map information being provided by a central server.

From document WO 2007/054180 it is known a method and a system for updating map data of a navigation system in a vehicle. It is displayed a map server, which comprises a memory device, which stores map information and additional map information. The map server comprises a receiving and a transmission device for receiving-transmitting data to a navigation system. The method described for updating map data in a first version of map data is stored in a memory device of a navigation system, and a first version of map data and a second version of map data are stored in a memory device of a map server. Thus, a second version of map data is stored in a memory device of the map server and the map server determines the second route to a destination on the basis of the second version of map data and transmits the second version of map data and the second route.

In order to solve the aforementioned problems, the object of the present invention is to provide a map information processing apparatus, control method for a map information processing apparatus, control program for a map information processing apparatus, and recording medium for recording a control program for a map information processing apparatus that are capable of minimizing the amount of data to be updated by setting affected areas of new roads when a server apparatus performs maintenance of new road information, and when the result of a calculated route is within an affected area, selecting the roads that affect route calculation and updating only the selected roads in object units.

### SUMMARY OF THE INVENTION

The above object of the present invention can be achieved by a map information processing apparatus according to claim 1.

According to the present invention, by setting the affected area of a new road when performing maintenance on the server for new roads, then when the result of a route calculation is within the range of the affected area it is possible to select roads that are affected. Also, by updating only selected roads in object units, it is possible to minimize the amount of updated data.

According to the present invention, update is accomplished by performing an update of the minimum link or object for the effect of the update to be realized, so it is possible to prevent an unnecessary increase in communication cost or communication traffic. Also, even when there is an interruption in communication, it is possible for the navigation apparatus of the client to perform a route search, and by saving the transaction in the navigation apparatus of the client, then as soon as communication becomes possible again, it is possible to perform update with the server apparatus.

In another aspect of the present invention can be achieved by the map information processing of the present invention. The map information processing apparatus is further provided with a travel cost calculation device for calculating the travel cost when a moving body travels between predetermined locations in the new road information; wherein, the related area information is set so that it is related to the travel cost calculated by the travel cost calculation device.

According to the present invention, when updating map data, it is possible to add update map data to the navigation apparatus for the minimum range that will affect the route search result. Also, it becomes possible to efficiently select road information to be updated and calculated a route.

In further aspect of the present invention can be achieved by the map information processing of the present invention. The map information processing apparatus is further provided with a comparison calculation device for performing a comparison calculation between the travel cost when a moving body travels between predetermined locations of the new road information based on the map information, and the travel cost when the moving body travels between predetermined locations of the new road information based on the additional map information; wherein, the related area information is set so that it is related to the travel cost calculated by the comparison calculation device.

According to the present invention, update is accomplished by performing an update of the minimum link or object for the effect of the update to be realized, so it is possible to prevent an unnecessary increase in communication cost or communication traffic. Also, even when there is an interruption in communication, it is possible for the navigation apparatus of the client to perform a route search, and by saving the transaction in the navigation apparatus of the client, then as soon as communication becomes possible again, it is possible to perform update with the server apparatus. Furthermore, when updating map data, it is possible to add update map data to the navigation apparatus for the minimum range that will affect the route search result. Also, it becomes possible to efficiently select road information to be updated and calculated a route.

In further aspect of the present invention can be achieved by a map information processing system. The map information processing system is provided with the map information processing apparatus of the present invention; and the navigation apparatus is provided with: a route search device for executing a route search; a transmitting/receiving device for transmitting or receiving the additional map information and route search information from the route search device; and an additional map information memory device for storing the additional map information that is received by the transmitting/receiving device.

According to the present invention, update is accomplished by performing an update of the minimum link or object for the effect of the update to be realized, so it is possible to prevent an unnecessary increase in communication cost or communication traffic. Also, even when there is an interruption in communication, it is possible for the navigation apparatus of the client to perform a route search, and by saving the transaction in the navigation apparatus of the client, then as soon as communication becomes possible again, it is possible to perform update with the server apparatus. Furthermore, when a route search is performed based on map information that does not include new roads, or when road nodes of new roads are not included in the route search result information, when the effective update range of a new road overlaps part of the route of the route search result, the invention has the effect that additional map information that includes the new road is transmitted from the road information server apparatus to the navigation apparatus. In other words, it is no longer difficult to update new roads that are not connected to main roads, so it is possible to more effectively perform an update of additional map information that includes new roads.

In further aspect of the present invention can be achieved by the map information processing system of the present invention. The map information processing system of the present invention is, wherein the navigation apparatus is provided with: a display device for displaying route search information that is obtained by the route search device; and the display device displays route search information that is found by the route search device based on the map information that includes the additional map information that is received by the transmitting/receiving device.

According to the present invention, when a navigation apparatus being used by a client (user, end user, etc.) performs a route search calculation, it transmits the result of the route calculation to the server without the client noticing and does not display the result immediately on the display unit. The server apparatus determines whether or not it is necessary to update the road information, and when it is determined that it is necessary to update the road information, transmits the updated information to the navigation apparatus of the client. The navigation apparatus receives the updated information, and based on road information that includes the update information, calculates a route again and so that the client notices, displays the result of the route search on the display unit or provides audio guidance.

### BRIEF DESCRIPTION OF THE DRAWINGS

FIG. 1A is a drawing showing an example of system configuration for a map information processing system that includes the navigation apparatus and road information server apparatus (road information processing apparatus) of an embodiment of the invention.
FIG. 1B is a block diagram of the inside of the navigation apparatus of an embodiment of the invention.
FIG. 1C is a block diagram of the inside of the road information server apparatus of an embodiment of the invention.
FIG. 2 is a drawing showing the state in which additional map information is added to and stored in the map information stored in the map information server apparatus of an embodiment of the invention.
FIG. 3 is a drawing showing an example of an area of additional map information of an embodiment of the invention that is the object of new road update.
FIG. 4 is a flowchart showing the method for creating an area of additional map information of an embodiment of the invention that is the object of new road update.
FIG. 5 is a drawing showing the state in which the navigation apparatus of an embodiment of the invention searched a route based on map information.
FIG. 6 is a drawing showing the state in which the road information server apparatus of an embodiment of the invention searched a route based on map information and additional map information.
FIG. 7 is a drawing showing a system sequence in a map information processing system that includes the navigation apparatus and road information server apparatus (road information processing apparatus) of an embodiment of the invention.
FIGS. 8A and 8B are drawings showing an example in which a route is searched using the map information processing system of an embodiment of the invention.

### DESCRIPTION OF THE PREFERRED EMBODIMENTS

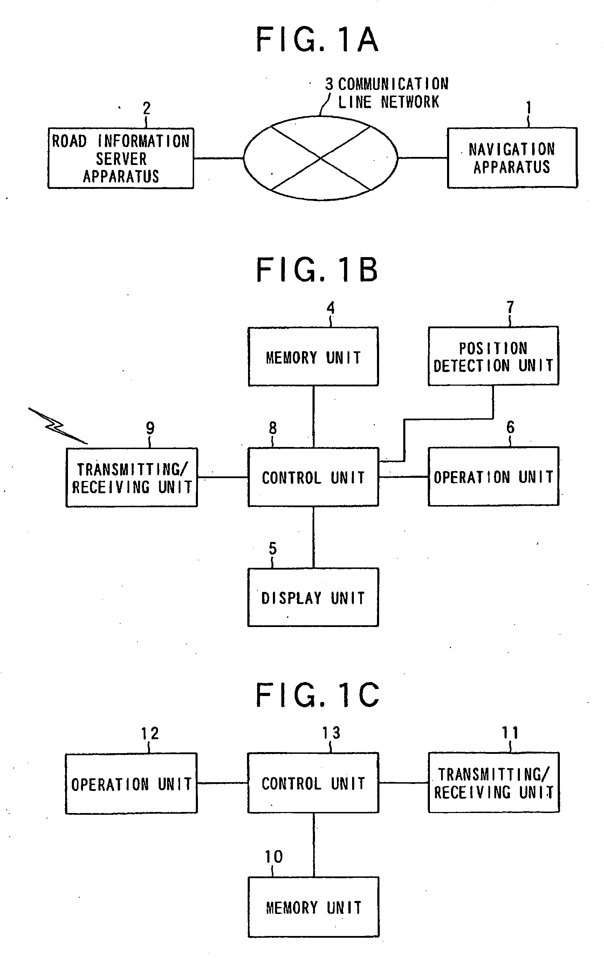

The preferred embodiment of the present invention will be explained below based on FIG. 1 to FIG. 8. FIG. 1A is a drawing showing an example of system configuration for a map information processing system that includes the navigation apparatus and road information server apparatus (road information processing apparatus) of an embodiment of the invention. FIG. 1B is a block diagram of the inside of the navigation apparatus of an embodiment of the invention. FIG. 1C is a block diagram of the inside of the road information server apparatus of an embodiment of the invention.

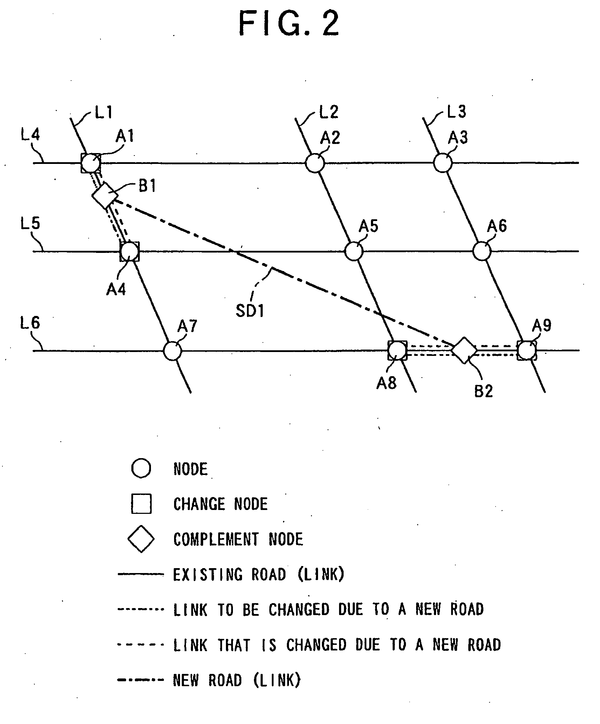

FIG. 2 is a drawing showing the state in which additional map information is added to and stored in the map information stored in the map information server apparatus of an embodiment of the invention.

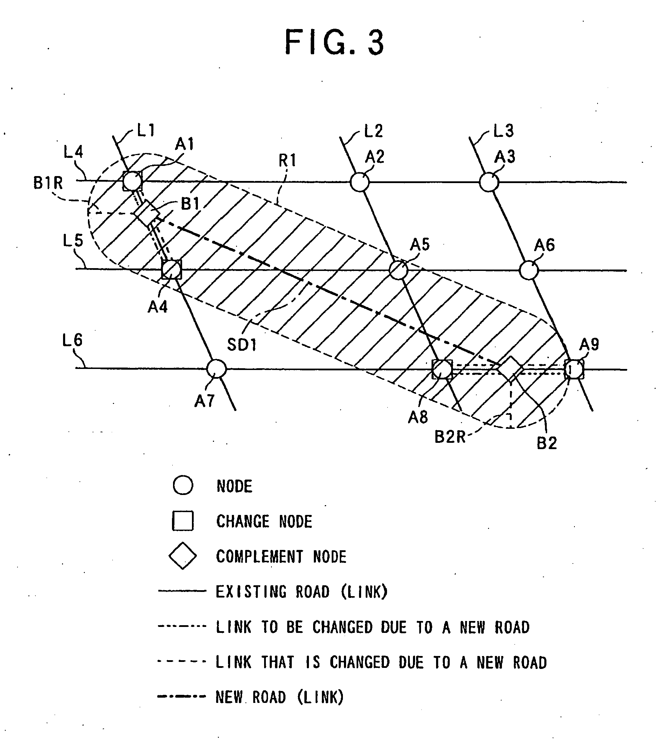

FIG. 3 is a drawing showing an example of an area of additional map information of an embodiment of the invention that is the object of new road update.

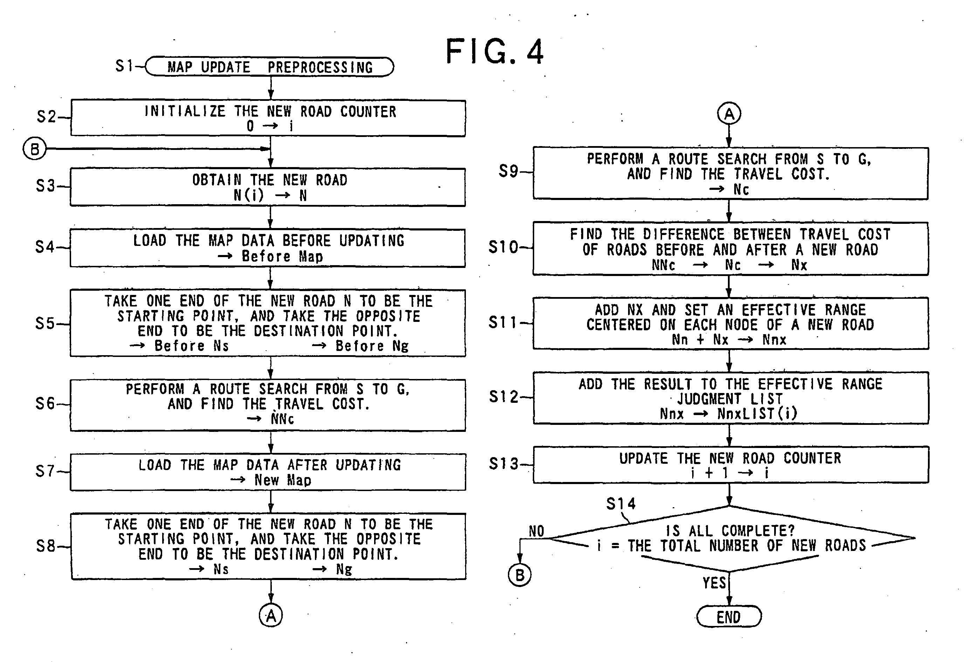

FIG. 4 is a flowchart showing the method for creating an area of additional map information of an embodiment of the invention that is the object of new road update.

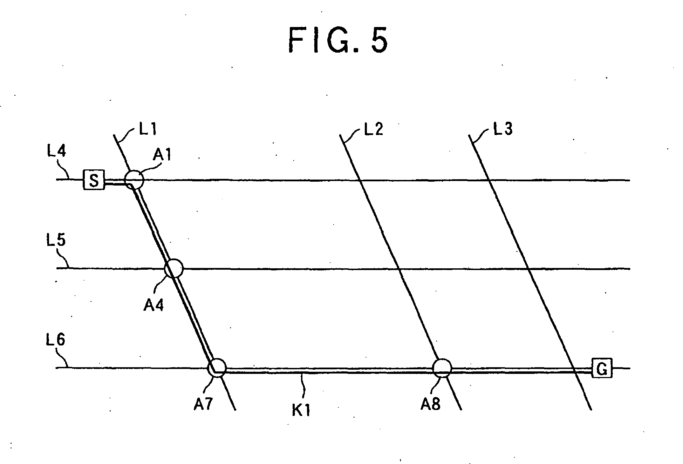

FIG. 5 is a drawing showing the state in which the navigation apparatus of an embodiment of the invention searched a route based on map information.

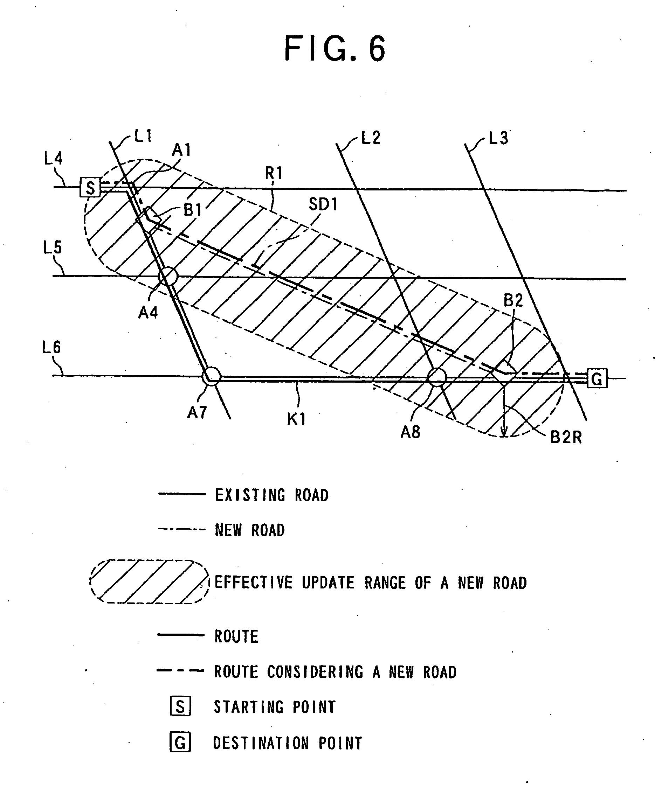

FIG. 6 is a drawing showing the state in which the road information server apparatus of an embodiment of the invention searched a route based on map information and additional map information.

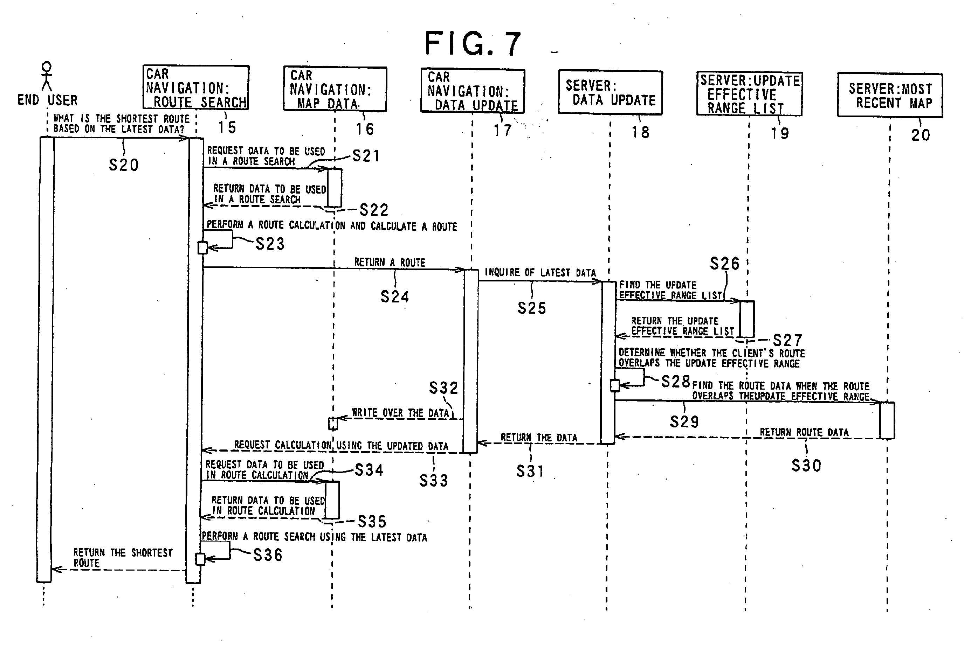

FIG. 7 is a drawing showing a system sequence in a map information processing system that includes the navigation apparatus and road information server apparatus (road information processing apparatus) of an embodiment of the invention.

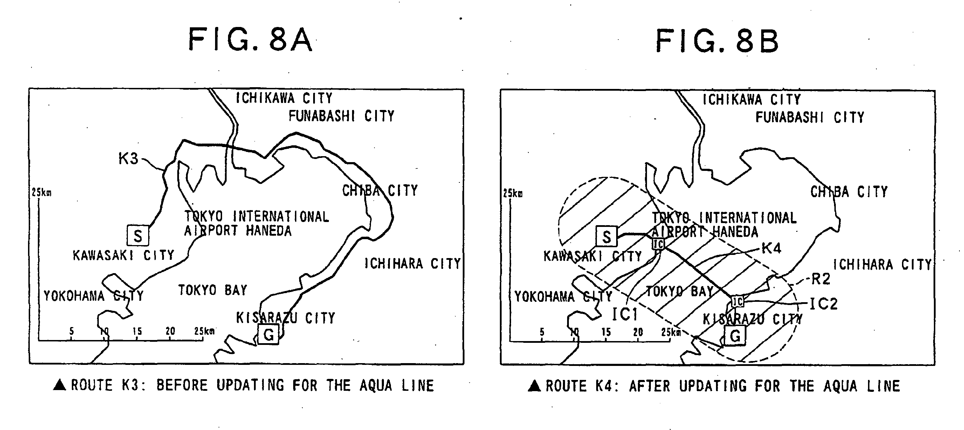

FIG. 8 is a drawing showing an example in which a route is searched using the map information processing system of an embodiment of the invention.

First, an example of the system configuration of a map information processing system that includes the navigation apparatus 1 and road information server apparatus 2 of an embodiment of the invention will be explained based on FIG. 1A.

As shown in FIG. 1A, the navigation apparatus 1 and road information server apparatus 2 are connected so that they can transmit information to and receive information from each other via a communication network 3. Navigation apparatuses 1 are installed in a plurality of moving bodies, and constantly, information is being transmitted between the navigation apparatuses 1 that are installed in these moving bodies and the road information server apparatus 2.

The navigation apparatus 1 transmits the result of a searched route to the road information server 2 via a communication network 3. The road information server apparatus 2 performs a route search that includes additional map information that is stored in the road information server apparatus 2 based on the starting point information and ending point information of the route that was searched by the navigation apparatus 1. As a result, when the road information server apparatus 2 determines that it must send additional map information related to the route search to the navigation apparatus 1, the road information server apparatus 2 sends additional map information related to the route search to the navigation apparatus 1 via the communication network 3.

Next, an example of the internal block construction of the navigation apparatus 1 of this embodiment of the invention will be explained based on FIG. 1B.

The navigation apparatus 1 of this embodiment comprises: a memory unit 4, display unit 5, operation unit 6, position detection unit 7, control unit 8 and transmission/reception unit 9.

Map information such as road information for the navigation function is stored in the memory unit 4. This map information also includes additional map information that is sent from the road information server apparatus 2 as necessary. The road information may also be stored on a recording medium such as a CD (Compact Disc), DVD (Digital Versatile Disc), HD (Hard Disc) or the like and supplied to the user, and the memory unit 4 is a memory apparatus that also includes these recording media. Typically, when all of the road information is updated about once every several years, a recording medium such as a CD, DVD, HD or the like on which all of the updated road information is recorded is supplied to the user from the road map information provider. Also, when road information is supplied from the road information server apparatus 2, the road information is stored in the memory unit 4 via the communication network 3 and transmitting/receiving unit 9. Moreover, the memory unit 4 also functions as a temporary memory apparatus that is used by the control function of the control unit 8.

The position detection unit 7 is a unit that detects the position of the moving body. For example, various information acquisition apparatuses such as a GPS (Global Positioning System) apparatus, a direction sensor, slope sensor, speed sensor, timer that measures the time of travel, indicators of the vehicle that is the moving body, acceleration control, brake control and the like can be used as the position detection unit 7.

The display unit 5 displays road information and route search results based on the road information that is stored in the memory unit 4 and the additional map information that is sent from the road information server apparatus 2. Also, based on the position information of the moving body that is detected by the position detection unit 7, the current position is displayed on top of the road information on the display unit 5. The position information of the moving body that is displayed on the display unit 5 is processed information that is obtained by the control unit 8 performing a preset process on the information detected from the position detection unit 7 and then displayed on the display unit 5. Also, the information detected by the position detection unit 7 can be used as is and displayed on the display unit 5.

Based on position information that is detected by the position detection unit 7, road information that is stored in the memory unit 4 and additional map information that is sent from the road information server apparatus 2, the control unit 8 performs the process of displaying on the display unit 5 the position of the moving body that was detected by the position detection unit 7 on the roads included in the road information.

Moreover, the control unit 8 performs the process of storing the additional map information that is received via the transmitting/ receiving unit 9 in the memory unit 4.

Furthermore, the control unit 8 performs a route search based on road information that is stored in the memory unit 4 and starting point information and ending point information that is specified by the user via the operation unit 6. The route search result is sent to the road information server apparatus 2 via the transmitting/ receiving unit 9 and communication network 3. Also, the control unit 8 performs a route search based on additional map information that is sent from the road information server apparatus 2 and road information that is stored in the memory unit 4. Moreover, the control unit 8 displays the route search result that includes the additional map information and that has the least cost on the display unit 5.

Furthermore, the control unit 8 performs overall control of the memory unit 4, display unit 5, operation unit 6, position detection unit 7 and transmitting/receiving unit 9.

The transmitting/receiving unit 9 receives road information and additional map information from the road information server apparatus 2.

Also, the transmitting/receiving unit 9 transmits the route search result information that was searched by the control unit 8 to the road information server apparatus 2 via the communication network 3. The road information server apparatus 2 checks the update effective range based on the route information that was searched for by the navigation apparatus 1 and received via the communication network 3. As a result, when the road information server apparatus 2 determines that additional map information that is not stored in the memory unit 4 of the navigation apparatus 1 is necessary for the route search (when all or part of the route information is located in the update effective range), the road information server apparatus 2 sends the additional map information to the transmitting/receiving unit 9 of the navigation apparatus 1 via the communication network 3.

When a user performs a route search, the user inputs starting point information and ending point information to the operation unit 6. Also, the operation unit 6 comprises operation switches and the like for the user to perform the various functions of the navigation apparatus 1.

Next, the internal blocks of the road information server apparatus 2 of this embodiment of the invention will be explained based on FIG. 1C.

The road information server apparatus 2 comprises a memory unit 10, transmitting/receiving unit 11, operation unit 12 and control unit 13.

Various road information, an update effective range list that is created according to the procedure shown in FIG. 4 and additional map information are stored in the memory unit 10. The additional map information includes new road information. Also, when the new road information is added to existing road information, new node information between the new road information and existing road information is stored in the memory unit 10.

The additional map information is sent to a moving body as necessary when a route search is performed by a navigation apparatus 1 that is installed in the moving body and the result information for that route search is received by the road information server apparatus 2. Also, road information and additional map information is input to and stored in the memory unit 10 via the operation unit 12.

The transmitting/receiving unit 11 receives route search result information from a route search performed by the navigation apparatus 1, and transmits additional map information that is stored in the memory unit 10 to the moving body as necessary.

The control unit 12 comprises operation switches for the road map information provider to perform the various functions of the road information server apparatus 2. Also, additional map information, which is information related to new roads and new information related to existing roads, is input to the road information server apparatus 2 via the operation unit 12. The input additional map information is stored in the memory unit 10.

The control unit 13 controls the memory unit 10, the transmitting/receiving unit 11 and operation unit 12 according to the procedure 18 to 20 shown in FIG. 7. Also, based on route information that is sent from a moving body, the control unit 13 determines whether or not additional map information that is stored in the memory unit 10 is necessary for a route search. When the control unit 13 of the road information server 2 determines that additional map information that is not stored in the memory unit 4 of the navigation apparatus 1 that is installed in a moving body is necessary for a route search that is performed by the moving body, the control unit 13 comprises a function for transmitting additional map information that is stored in the memory unit 10 of the road information server apparatus 2 to the navigation apparatus 1 via the transmitting/receiving unit 11 and communication network 3.

Next, FIG. 2 will be explained.

FIG. 2 is a drawing showing the state in which a new road SD1 is additionally stored as additional map information to the road information that is stored in the memory unit 10 of the road information server apparatus 2.

In FIG. 2, road L1, road L2, road L3, road L4, road L5, road L6, road node A1, road node A2, road node A3, road node A4, road node A5, road node A6, road node A7, road node A8 and road node A9 are stored in the memory unit 10 as prior map information.

New road SD1 connects to road L1 between road node A1 and road node A4 of road L1. This connection point is stored in the memory unit 10 as road node B1. Also, new road SD1 is connected to road L6 between road node A9 and road node A8 of road L6. This connection point is stored in the memory unit 10 as road node B2.

In other words, the link between road node A1 and road node A4 is divided into the link between road node A1 and road node B1 and the link between road node B1 and road node A4. Also, the link between road node A8 and road node A9 is divided into the link between road node A8 and road node B2, and the link between road node B2 and road node A9. The divided link information is also stored in the memory unit 10. Also, road node B1 and road node B2 are correlated with new road SD1.

The new road SD1 and road node B1 and road node B2 that are correlated to the new road SD1 are stored in the memory unit 10 as additional map information.

Next, FIG. 3 will be explained.

FIG. 3 is a drawing showing the range of the related area R1 (update effective range) of the new road SD1 in the additional map information that is stored in the memory unit 10 of the road information server apparatus 2 shown in FIG. 2.

In FIG. 3, the related area R1 of the new road SD1 is the portion indicated by the diagonal lines. The related area R1 can be set arbitrarily. Here, an example of a method for setting the related area will be described.

An example of related area R1 can be constructed from a semi-circular area shown having a radius B1R with the road node B1 of the new road SD1 as the center, parallel lines that run above and below the new road SD1 in FIG. 3, and a semi-circular area having a radius B2R with the road node B2 as the center.

The travel cost of the moving body between the road node B1 and road node B2 of the new road SD1 is taken to be the new road travel cost NC. Also, the travel cost of when the moving body does not use the new road SD1 between road node B1 and road node B2 is taken to be the prior travel cost NN. As an example of a travel route when the moving body does not use the new road SD1 between road node B1 and road node B2, is a route that goes from road node B1 to road node B1 via road node A4, road node A7 and road node A8.

The related area R1 can be taken to be an amount that is proportional to the amount obtained by subtracting the new road travel cost NC from the prior travel cost NN.

For example, when time is considered as the travel cost, then when the time corresponding to the new road travel cost NC when a moving body travels over the new road at a predetermined speed (the speed does not have to be constant but can change) is 1 hour, and the time of the prior travel cost NN when a moving body travels over the prior roads at a predetermined speed (the speed does not have to be constant but can change) is 3 hours, an amount corresponding to the difference of 2 hours corresponds to the width of the related area R1. The distance obtained by dividing the difference of 2 hours by a predetermined speed can be taken to be the radius B1R and radius B2R. It is also possible to use a predetermined value to perform an operation such as addition, subtraction, multiplication or division on the value obtained by dividing the difference of 2 hours by a predetermined speed, and to take the adjusted value to be the related area R1.

Also, setting of the related area R1 (update effective range) can be taken to be A/ (new road travel cost) NC. Here, A is a constant. The larger the new road travel cost NC is, the longer the travel time becomes, so the update effective range become narrower. However, the smaller the new road travel cost becomes, the shorter the travel time becomes, so the update effective range become larger (wider). The smoother the moving body can travel over the new road, the larger the update effective range becomes.

Moreover, when the new road is a freeway, it is possible to set the update effective range so that it is only centered on the entrance and exit points of the new freeway. For example, a circle having a fixed radius is the simplest example. It is also possible to calculate the size of the update effective range so that it has the form of being inversely proportional to the link cost of the prior roads that connect to the entrance and exit points of the new freeway.

Furthermore, the update effective range can be calculated to be along the roads (link cost NI) that connect to the new road (link cost NC). For example, by finding a value having a form that is inversely proportional to both link cost of the new road and the roads that connect to the new road, such as A/ (NC*NI) or A/ (NC+NI), the found value becomes the update effective range of the roads that connect to the new road.

Also, it is possible to set the size of the update effective range based on the type of new road (for example, road width, number of lanes, speed limit, whether or not the road is a freeway, a toll road or highway, etc.), or it is possible to add changes to the size of the update effective range by multiplying the size by a coefficient that is predetermined based on the type of new road. Moreover, the coefficient that is predetermined based on the type of new road can be set to a value that changes in correspondence to dynamic conditions that change together with time. Furthermore, it is also possible to recalculate the coefficient on the side of the server in correspondence to these conditions that change together with time, and then for the server to reset the coefficient based on the recalculated result on the server side.

Also, it is possible to set the update effective range along prior roads without setting the update effective range two dimensionally.

It is also possible to pre select and list prior roads that are connected to a new road according to the travel cost, and determine whether or not the roads of the selected list match the user's route.

Next, FIG. 4 will be used to explain an example of a flowchart for calculating the update effective range for each new road when there are new roads. This calculation is performed by the control unit 13 of the road information server apparatus 2, and the result may be stored in the memory unit 10 of the road information server apparatus 2. Also, update effective range data that is calculated beforehand by the procedure shown in FIG. 4 outside of the road information server apparatus 2 can be stored in the memory unit 10 of the road information server apparatus 2 by operating the operation unit 12 of the road information server apparatus 2.

In step S1, new road information is input to the road information server apparatus 2 via an input unit such as the operation unit 12, and stored in the memory unit 10. The process then proceeds to step S2.

In step S2, the control unit 13 of the road information server apparatus 2 initializes a new road counter I to '0'. The process then advances to step S3.

In step S3, the control unit 13 extracts information about a new road N(I) that is stored in the memory unit 10, and takes it to be a new road N. Next, the process advances to step S4.

In step S4, the control unit 13 extracts map data from the memory unit 10 that was stored before the new road was stored as additional map information. The control unit 13 assigns the name 'Before Map' to the extracted map data. The process then advances to step S5.

In step S5, the control unit 13 takes one end of the new road N to be the starting point 'Before Ns', and take the opposite end to be the destination point 'Before Ng'. The process then advances to step S6.

In step S6, the control unit 13 uses the map data before updating to perform a route search from the starting point 'Before Ns' to the destination 'Before Ng', and calculates the travel cost NNC from the starting point 'Before Ns' to the destination 'Before Ng' in the map data before updating. Next, the process advances to step S7.

In step S7, the control unit 13 extracts updated map information from the memory unit 10 after the new road has been stored as additional map information. The control unit 13 assigns the name 'New Map' to the extracted map information. Next, the process advances to step S8.

In step S8, the control unit 13 takes one end of the new road N to be the starting point Ns, and takes the end opposite from the starting point Ns to be the destination point Ng. The process then advances to step S9.

In step S9, the control unit uses the 'New Map', which is extracted map data, and performs a route search from the starting point Ns to the destination point Ng, and calculates the travel cost NC from the starting point Ns to the destination point Ng. The process then advances to step S10.

In step S10, the control unit 13 subtracts the travel cost NC that includes the new road from the travel cost NNC that does not include the new road, and takes the result of subtraction to be NNX. The process then advances to step S11.

In step S11, the control unit 13 performs the addition operation of adding NX centered on each node NN of the new road, and sets the update effective range. For example, taking node 1 of the new road to be N1, the distance from N1 to NX becomes the update effective range. The process then advances to step S12.

In step S12, the control unit 13 adds the calculation result NNX that was obtained in step S10 to an effective range judgment list that is stored in the memory 10. The control unit 13 records the calculation result NNX in the effective range judgment list NNXList(I) for each I that is incremented in step S13, and stores the list in the memory unit 10. The process then advances to step S13.

In step S13, the control unit 13 increments the new road counter by '1'. The process then advances to step S14.

In step S14, the control unit 13 determines whether or not an update effective range is set for each new road. When an update effective range is set for each new road (step S14: YES), processing ends. When an update effective range is not set for each new road (step S14: NO), the process returns to step S3.

Based on the flowchart of the operation described above, update effective ranges are set in the road information server apparatus 2 for each new road.

Next, FIG. 5 is used to show the result when a navigation apparatus 1 performs a route search for the area shown in FIG. 2 using the map information stored in the memory unit 4 when the control unit 8 has not stored new roads in the map information of the memory unit 4 as additional map information.

The starting point S is a point on road L6, and the destination point G is a point on road L9. The route, which is the result of a route search, is indicated as route K1. Route K1 is a route that runs from the starting point S on road L6 to the destination point G via road node A1, road node A4, road node A8 and road node A9.

In order to check whether or not the route K1 that was searched in FIG. 5 has the smallest travel cost, the navigation apparatus 1 transmits route search information related to route K1 to the road information server apparatus 2 via the transmitting/receiving unit 9.

The road information server apparatus 2 receives the route search information related to route K1 via the transmitting/receiving unit 9, and determines whether or not there are any parts in route 1 that overlap the related area R1 that takes into consideration new roads. When there are parts in route 1 that overlap the related area R1 that takes into consideration new roads, the road information server apparatus 2 transmits new road information for related area R1 that is stored in the memory unit 10 to the navigation apparatus 1 via the transmitting/receiving unit 9. When there is no part of route 1 that overlaps the related area R1 that takes into consideration new roads, the road information server apparatus 2 transmits result information indicating that there is no update information to the navigation apparatus 1 via the transmitting/receiving unit 9.

In the navigation apparatus 1, the control unit 8 adds the additional map information and searches for a route according to the procedure shown in FIG. 6.

FIG. 6 is a drawing that shows the effective update range, which is the related area R1 of new road SD1, and shows that it includes the searched route K1 that was selected by the navigation apparatus 1 is FIG. 5.

In FIG. 6, the part of the searched route K1 from road node B1 to road node A4 overlaps the related area R1, so the control unit 8 executes a route search that uses the new road SD1 that is related to the related range R1 in the route search of the route from the starting point S to the destination G that was set by the moving body. When no part of the searched route K1 overlaps the related area R1, the road information server apparatus 2 does not transmit additional map information to the navigation apparatus 1, so the control unit 8 does not determine whether or not it can use the new road SD1 related to the related area R1 in the route from the starting point S to the destination G that was set by the moving body. In this case, the road information server apparatus 2 transmits information to the navigation apparatus 1 that there is no update data. Therefore, the control unit 8 does not check from the beginning whether or not it can use the new road SD1 in a route search. As a result, the control unit 8 of the navigation apparatus 1 displays the route K1 on the display unit 5 of the navigation apparatus 1.

In this embodiment, the part of the searched route K1 from road node B2 to road node A8 also overlaps the related area R1, so the control unit executes a route search that uses the new road SD related to the related area R1 for the route from the starting point S to the destination point G that was set by the moving body.

The control unit 8 recognizes that road node A7 is on the extended line from road node B1 to road node A4, and is on the extended line from road node B2 to road node A8. Also, the control unit 8 recognizes that the route from road node B to road node B2 via A7 is part of the searched route K1 that was searched using prior roads.

Therefore, the control unit 8 performs a route search for the case in which the moving body travels over prior roads from road node B1 to road node B2 via road node A4, road node A7 and road node A8, while at the same time calculates the travel cost. Also, the control unit 8 performs a route search for the case in which the moving body uses the new road SD1 from road node B1 to road node B2, while at the same time calculates the travel cost. The control unit 8 is not limited to only these routes when searching routes, and based on the map information that is added by the additional map information, finds the most optimum route while calculating the travel cost for all of the routes that the moving body can travel.

As a result, in this embodiment, the route using the new road SD1 from road node B1 to road node B2 has the smallest travel cost (shortest travel distance, etc.), so the control unit 8 of the navigation apparatus 1 determines that rather than the route K1 from the starting point S on road L6 to the destination point G via road node A1, road node A4, road node A7, road node A8 and road node A9 that was found before additional map information was transmitted from the road information server apparatus 2, it should select the route K2 that uses the new road and that runs from the starting point S on road L6 to the destination point G via road node A1, road node B1, road node B2 and road node A9.

As a result, the control unit 8 of the navigation apparatus 1 displays the route K2 on the display unit 5 of the navigation apparatus 1. Also, the route K1 is never displayed on the display unit 5 of the navigation apparatus 1. In this way, the most optimum route that considers new roads is always provided to the user of the navigation apparatus 1.

Next, FIG. 7 will be explained.

FIG. 7 is a drawing showing the operation of each part explained using FIG. 2 to FIG. 6 as a system sequence.

Starting from the top on the left side and going across the horizontal axis of FIG. 7 is the operation 14 by the end user, route search 15 by the navigation apparatus 1, map information 15 in the navigation apparatus 1, update 17 of map information by the road information server apparatus 2, update 18 of map information by the road information server apparatus 2, processing of the update effective range 19 by the road information server apparatus 2, and additional map information 20 in the road information server apparatus 2.

In step S20 in FIG. 7, the end user instructs the navigation apparatus 1 to perform a route search for a route having the shortest distance.

In step S21, the control unit 8 of the navigation apparatus 1 sends a request to the memory unit 4 of the navigation apparatus 2 for map information required to perform the route search.

In step S22, the control unit 8 of the navigation apparatus 1 extracts the map information required for the route search from the memory unit 4 of the navigation apparatus 1.

In step S23, the control unit 8 of the navigation apparatus 1 performs the route calculation for the route search.

In step S24, the route that was calculated in step S23 is taken to be a route candidate for the car navigation apparatus 1.

In step S25, the car navigation apparatus 1 sends the route calculated in step S23 to the road information server apparatus 2 and makes an inquiry for road information such as the latest new roads.

In step S26, the control unit 13 of the road information server apparatus 2 sends a request to the memory unit 10 of the road information server apparatus 2 for an update effective range list that corresponds to the new roads.

In step S27 the memory unit 10 of the road information server apparatus 2 sends an update effective range list that corresponds to the new roads to the control unit 13 of the road information server apparatus 2.

In step S28, the control unit 13 of the road information server apparatus 2 determines whether or not all or part of the route that was searched in step S23 overlaps the update effective range list that corresponds to the new roads.

In step S29, when part of the data of the route search overlaps the update effective range list, the control unit 13 of the road information server apparatus 2 sends a request to the memory unit 10 of the road information server apparatus 2 for additional map information related to the new roads that correspond to the update effective range list. When no part of the data of the route search overlaps the update effective range list, the control unit 13 of the road information server apparatus 2 sends information indicating that there is no update data, and ends processing.

In step S30, the memory unit 10 of the road information server apparatus 2 sends additional map information related to new roads that correspond to the update effective range list to the control unit 13 of the road information server apparatus 2.

In step S31, the road information server apparatus 2 sends additional map information related to new roads that correspond to the update effective range list to the navigation apparatus 1.

In step S32, the additional map information related to new roads that correspond to the update effective range list is stored as update in the memory unit 4 of the navigation apparatus 1.

In step S33, the navigation apparatus 1 starts a route search based on map information that includes the updated additional map information.

In step S34, the control unit 8 of the navigation apparatus 1 sends a request to the memory unit 4 of the navigation apparatus 1 for map information that includes the additional map information and that is used in the route search calculation.

In step S35 the memory unit 4 of the navigation apparatus 1 sends map information that includes the additional map information and that is used in the route search calculation to the control unit 8 of the navigation apparatus 1.

In step S36, the control unit 8 of the navigation apparatus 1 searches for a route based on map information that includes the updated additional map information.

In step S37, the shortest route based on the results of the route search performed in step S36 is displayed on the display unit 5 of the navigation apparatus 1 and the end user is notified.

Next, FIGS. 8A and 8B will be explained.

FIGS. 8A and 8B are drawings showing an example of the case in which the present invention is applied where the 'Aqua Line' in Tokyo Bay is new road information.

FIG. 8A shows the result of a route search by the navigation apparatus 1 before registering the 'Aqua Line' as new road information. The starting point S is Kawasaki City and the destination point is Kisarazu City. In FIG. 8A, the route K3 is a route that passes by Tokyo and reaches the destination point G of Kisarazu City via Ichikawa City, Chiba City and Ichihara City in Chiba prefecture. With this route K3, the moving body travels along Tokyo Bay, so is a long way around, and to go from the starting point S of Kawasaki City to the destination point G of Kisarazu takes quite a lot of time.

On the other hand, FIG. 8B shows the result of a route search in which the 'Aqua Line' (road from IC1 to IC2) is added as a new road to the prior map information as additional map information, and shows the effective update range, which is the related area R2 of the 'Aqua Line'.

The travel time between the case where the moving body travels from IC1 to IC2 not using the 'Aqua Line' (FIG. 8A), and the case where the 'Aqua Line' is used (FIG. 8B) is greatly different, so the range where using the 'Aqua Line' to perform a route search is effective is a rather large range. Therefore, it can be seen that the related area R2 shown in FIG. 8B that runs along the 'Aqua Line' (road from IC1 to IC2) is set with a rather wide range. Also, it is shown that part of the route K3 that is the result of this embodiment of the route search from the starting point S of Kawasaki City to the destination point G of Kisarazu City overlaps the related area R2.

As a result of part of the route K3 overlapping the related area R2, the 'Aqua Line', which is a new road, is newly registered in the memory unit 4 of the navigation apparatus 1 as additional map information from the road information server apparatus 2, and the navigation apparatus 1 executes a route search again from the starting point S of Kawasaki City to the destination point G of Kisarazu City. As a result, the route K4 is displayed on the display unit 5 of the navigation apparatus 1 as the route having the smallest travel cost, and that result is shown in FIG. 8B.

### (Variation)

In the embodiment described above, the case of using a new road as additional map information was described. However, there is a possibility that part of a prior road could be deleted from map information, such as in the case where a prior road is closed. The operation of each of the components will be explained below for the case in which part of a prior road is deleted (the map information in this case is called deleted map information or additional map information (information related to new roads and deleted roads is included in additional map information)).

Information about the part of a prior road that is deleted is input to the memory unit 10 of the road information server apparatus 2 via the operation unit 12.

The control unit 13 of the road information server apparatus 2 sets the update effective range (related area) for the deleted road. Besides being found by the same method as used for the update effective range for a new road, the update effective ranges can be set by any arbitrary method.

The control unit 13 of the road information server apparatus 2 determines whether or not part or all of the route information that was transmitted from the navigation apparatus 1 overlaps the update effective range for the deleted road.

When the control unit 13 of the road information server 2 determines that part or all of the route information that was transmitted from the navigation apparatus 1 overlaps the update effective range for the deleted road, the control unit 13 transmits information indicating that part of a prior road has been deleted to the navigation apparatus 1 via the transmitting/ receiving unit 11.

The navigation apparatus 1 receives the information via the transmitting/receiving unit 9 indicating that part of a prior road has been deleted. Also, the control unit 8 of the navigation apparatus 1 updates the map information stored in the memory unit 4 based on the received information indicating that part of a prior road has been deleted. In the updated map information, the part of the prior road that is to be deleted is deleted. The control unit 8 stores the updated map information in the memory unit 4.

The control unit 8 of the navigation apparatus 1 performs a route search again based on the updated map information for the starting point and destination point for which a route search was performed before receiving the information having part of the prior road deleted.

The control unit 8 of the navigation apparatus 1 performs a normal route search to find the route having the smallest travel cost.

The control unit 8 of the navigation apparatus 1 displays the route information, which is the result of the new route search, on the display unit 5.

The route K1 is never displayed on the display unit 5 of the navigation apparatus 1. In this way, the optimum route that takes into consideration deleted roads is always provided to the user of the navigation apparatus 1.

The operating procedure shown in FIG. 2 to FIG. 7 and the operating procedure of the example of a variation are recorded beforehand on a recording medium such as a hard disc, or can be recorded beforehand by way of a network such as the Internet, and by reading the operating procedure by a general-purpose microcomputer or the like, it is possible to make that general-purpose microcomputer function as the CPU of this embodiment.

With the embodiment of the invention described above, by setting the affected area of a new road when performing maintenance on the server for new roads, then when the result of a route calculation is within the range of the affected area it is possible to select roads that are affected. Also, by updating only selected roads in object units, it is possible to minimize the amount of updated data.

Also, when a navigation apparatus being used by a client (user, end user, etc.) performs a route search calculation, it transmits the result of the route calculation to the server without the client noticing and does not display the result immediately on the display unit. The server apparatus determines whether or not it is necessary to update the road information, and when it is determined that it is necessary to update the road information, transmits the updated information to the navigation apparatus of the client. The navigation apparatus receives the updated information, and based on road information that includes the update information, calculates a route again and so that the client notices, displays the result of the route search on the display unit or provides audio guidance.

Therefore, it is possible for the client to always know the result of route calculation based on the most recent map data. Also, since roads that have a large effect on the route calculation are updated, there is a high possibility that the update will be effective in future route searches.

Moreover, with the present invention, update is accomplished by performing an update of the minimum link or object for the effect of the update to be realized, so it is possible to prevent an unnecessary increase in communication cost or communication traffic. Also, even when there is an interruption in communication, it is possible for the navigation apparatus of the client to perform a route search, and by saving the transaction in the navigation apparatus of the client, then as soon as communication becomes possible again, it is possible to perform update with the server apparatus.

Also, when a route search is performed based on map information that does not include new roads, or when road nodes of new roads are not included in the route search result information, when the effective update range of a new road overlaps part of the route of the route search result, the invention has the effect that additional map information that includes the new road is transmitted from the road information server apparatus 2 to the navigation apparatus 1. In other words, it is no longer difficult to update new roads that are not connected to main roads, so it is possible to more effectively perform an update of additional map information that includes new roads.

Moreover, when updating map data, it is possible to add update map data to the navigation apparatus for the minimum range that will affect the route search result. Also, it becomes possible to efficiently select road information to be updated and calculated a route.

The invention is not limited to the embodiments or the example as described above, and suitable changes can be made within the range consistent with the content or idea of the invention, which can be read from the claims and the entire specifications, and a display apparatus or a method accompanying such changes is also included in the technical idea of the invention.

## Claims

1. A map information processing apparatus, **characterized in that** the map information processing apparatus comprises:
a memory device for storing additional map information;
a receiving device for receiving route information indicative of route searched by a navigation apparatus;
a setting device for setting related area information that is related to new road information of the additional map information in the map information,
a judgment device for determining whether or not part of the route information of the route search information overlaps the related area information;
a selection device for selecting the additional map information that corresponds to the new road information having the overlapping part; and
a transmission device for transmitting the additional map information selected by the selection device to the navigation apparatus.

2. The map information processing apparatus of claim 1, **characterized in that** the map information processing apparatus further comprises:
a travel cost calculation device for calculating the travel cost when a moving body travels between predetermined locations in the new road information; wherein
the related area information is set so that it is related to the travel cost calculated by the travel cost calculation device.

3. The map information processing apparatus of any one of claims 1 to 2, **characterized in that** the map information processing apparatus further comprises:
a comparison calculation device for performing a comparison calculation between the travel cost when a moving body travels between predetermined locations of the new road information based on the map information, and the travel cost when the moving body travels between predetermined locations of the new road information based on the additional map information; wherein
the related area information is set so that it is related to the travel cost calculated by the comparison calculation device.

4. A map information processing system, **characterized in that** the map information processing apparatus comprises:
the map information processing apparatus of any one of claims 1 to 3; and
the navigation apparatus comprises:
a route search device for executing a route search;
a transmitting/receiving device for transmitting or receiving the additional map information and route search information from the route search device; and
an additional map information memory device for storing the additional map information that is received by the transmitting/receiving device.

5. The map information processing system of claim 4, wherein
the navigation apparatus comprises:
a display device for displaying route search information that is obtained by the route search device; and
the display device displays route search information that is found by the route search device based on the map information that includes the additional map information that is received by the transmitting/receiving device.

6. A control method for a map information processing apparatus, **characterized in that** the control method for the map information processing apparatus comprises:
a memory process of storing additional map information including new road information;
a receiving process of receiving route information indicative of route searched by a navigation apparatus;
a setting process of setting related area information that is related to new road information of the additional map information in the map information,
a judgment process of determining whether or not part of the route information of the route search information overlaps the related area information;
a selection process of selecting the additional map information that corresponds to the new road information having the overlapping part; and
a transmission process of transmitting the additional map information selected in selection process to the navigation apparatus.

7. A control program for a map information processing apparatus, **characterized in that** the program causes a computer contained in the map information processing apparatus to function as:
a memory device for storing additional map information including new road information;
a receiving device for receiving route information indicative of route searched by a navigation apparatus;
a setting process of setting related area information that is related to new road information of the additional map information in the map information,
a judgment process of determining whether or not part of the route information of the route search information overlaps the related area information;
a selection process of selecting the additional map information that corresponds to the new road information having the overlapping part; and
a transmission process of transmitting the additional map information selected by the selection device to the navigation apparatus.

8. A recording medium on which the control program for a map information processing apparatus of claim 7 is recorded so that it can be read by a computer.

## Patentansprüche

1. Karteninformations-Verarbeitungseinrichtung,
**dadurch gekennzeichnet,**
**dass** die Karteninformations-Verarbeitungseinrichtung Folgendes umfasst:
eine Speichereinrichtung zum Speichern von Kartenzusatzinformationen,
eine Empfangseinrichtung zum Empfang von Routeninformationen,
die eine durch eine Navigationseinrichtung ermittelte Route bezeichnen,
eine Einstelleinrichtung zur Einstellung dazugehöriger Umgebungsinformationen, die sich auf neue Streckeninformationen der Kartenzusatzinformationen in den Karteninformationen beziehen,
eine Bewertungseinrichtung zur Bestimmung, ob sich ein Teil der Routeninformationen der Routensuchinformationen mit den dazugehörigen Umgebungsinformationen deckt,
eine Auswahleinrichtung zur Auswahl des sich deckenden Teils der Kartenzusatzinformationen, die mit den neuen Streckeninformationen korrespondieren, und
eine Sendeeinrichtung zum Senden der Kartenzusatzinformationen,
die durch die Auswahleinrichtung ausgewählt wurden, an die Navigationseinrichtung.

2. Karteninformations-Verarbeitungseinrichtung nach Anspruch 1,
**dadurch gekennzeichnet,**
**dass** die Karteninformations-Verarbeitungseinrichtung ferner Folgendes umfasst:
eine Fahrtkosten-Berechnungseinrichtung zur Berechnung der Fahrtkosten, die entstehen, wenn sich ein beweglicher Körper zwischen vorgegebenen Orten in den neuen Streckeninformationen fortbewegt, wobei
die dazugehörigen Umgebungsinformationen so eingestellt werden,
**dass** sie sich auf die Fahrtkosten beziehen, die durch die Fahrtkosten-Berechnungseinrichtung berechnet werden.

3. Karteninformations-Verarbeitungseinrichtung nach einem der Ansprüche 1 bis 2,
**dadurch gekennzeichnet,**
**dass** die Karteninformations-Verarbeitungseinrichtung ferner Folgendes umfasst:
eine Vergleichsberechnungseinrichtung zur Durchführung einer Vergleichsberechnung zwischen den Fahrtkosten, die entstehen, wenn sich ein beweglicher Körper zwischen vorgegebenen Orten in den neuen Streckeninformationen, die auf den Karteninformationen basieren, fortbewegt, und den Fahrtkosten, die entstehen, wenn sich der bewegliche Körper zwischen vorgegebenen Orten in den neuen Streckeninformationen, die auf den Kartenzusatzinformationen basieren, fortbewegt, wobei
die dazugehörigen Umgebungsinformationen so eingestellt sind, dass sie sich auf die Fahrtkosten beziehen, die durch die Vergleichsberechnungseinrichtung berechnet werden.

4. Karteninformations-Verarbeitungseinrichtung,
**dadurch gekennzeichnet,**
**dass** die Karteninformations-Verarbeitungseinrichtung Folgendes umfasst:
die Karteninformations-Verarbeitungseinrichtung nach einem der Ansprüche 1 bis 3, und
die Navigationseinrichtung, die Folgendes umfasst:
eine Routensucheinrichtung zur Durchführung einer Routensuche, eine Sende-/Empfangseinrichtung zum Senden oder Empfangen der Kartenzusatzinformationen und Routensuchinformationen von der Routensucheinrichtung, und
eine Kartenzusatzinformations-Speichereinrichtung zum Speichern der Kartenzusatzinformationen, die von der Sende-/Empfangseinrichtung empfangen werden.

5. Karteninformations-Verarbeitungseinrichtung nach Anspruch 4, wobei die Navigationseinrichtung Folgendes umfasst:
eine Anzeigeeinrichtung zur Anzeige der Routensuchinformationen, die durch die Routensucheinrichtung gewonnen werden, und wobei die Anzeigeinrichtung Routensuchinformationen anzeigt, die von der Routensucheinrichtung basierend auf den Karteninformationen ermittelt werden, welche die Kartenzusatzinformationen umfassen, die durch die Sende-/Empfangseinrichtung empfangen werden.

6. Steuerverfahren für eine Karteninformations-Verarbeitungseinrichtung,
**dadurch gekennzeichnet,**
**dass** das Steuerverfahren für die Karteninformations-Verarbeitungseinrichtung Folgendes umfasst:
einen Speichervorgang zum Speichern von Kartenzusatzinformationen, die neue Streckeninformationen enthalten,
einen Empfangsvorgang zum Empfang von Routeninformationen, die eine von einem Navigationssystem ermittelte Route bezeichnen,
einen Einstellvorgang zur Einstellung dazugehöriger Umgebungsinformationen, die sich auf neue Streckeninformationen der Kartenzusatzinformationen in den Karteninformationen beziehen,
einen Beurteilungsvorgang zur Bestimmung, ob sich ein Teil der Routeninformationen der Routensuchinformationen mit den dazugehörigen Umgebungsinformationen deckt,
einen Auswahlvorgang zur Auswahl des sich deckenden Teils der Kartenzusatzinformationen, die mit den neuen Streckeninformationen korrespondieren, und
einen Sendevorgang zum Senden der Kartenzusatzinformationen, die in dem Auswahlvorgang ausgewählt wurden, an die Navigationseinrichtung.

7. Steuerprogramm für eine Karteninformations-Verarbeitungseinrichtung,
**dadurch gekennzeichnet,**
**dass** das Programm einen Computer, der von der Karteninformations-Verarbeitungseinrichtung umfasst ist, dazu veranlasst, folgende Funktionen zu übernehmen bzw. auszuführen:
Speichereinrichtung zum Speichern von Kartenzusatzinformationen, die neue Streckeninformationen enthalten,
Empfangseinrichtung zum Empfang von Routeninformationen, die eine durch eine Navigationseinrichtung ermittelte Route bezeichnen,
Einstellvorgang zur Einstellung dazugehöriger Umgebungsinformationen, die sich auf neue Streckeninformationen der Kartenzusatzinformationen in den Karteninformationen beziehen,
Beurteilungsvorgang zur Bestimmung, ob sich ein Teil der Routeninformationen der Routensuchinformationen mit den dazugehörigen Umgebungsinformationen deckt,
Auswahlvorgang zur Auswahl des sich deckenden Teils der Kartenzusatzinformationen, die mit den neuen Streckeninformationen korrespondieren, und
Sendevorgang zum Senden der Kartenzusatzinformationen, die durch die Auswahleinrichtung ausgewählt wurden, an die Navigationseinrichtung.

8. Aufzeichnungsmedium, auf dem das Steuerprogramm für eine Karteninformations-Verarbeitungseinrichtung nach Anspruch 7 aufgezeichnet wird, so dass dieses von einem Computer gelesen werden kann.

## Revendications

1. Dispositif de traitement d' informations cartographiques,
**caractérisé en ce que**
le dispositif de traitement d' informations cartographiques comprend le suivant:
un dispositif de mémorisation pour mémoriser des informations cartographiques additionnelles,
un dispositif de réception pour recevoir des informations routières indicatives d'un itinéraire recherché par un dispositif de navigation,
un dispositif de réglage pour régler des informations de l'entourage associées qui se rapportent à de nouvelles informations routières des informations cartographiques additionnelles dans les informations cartographiques,
un dispositif de jugement pour déterminer si une partie des informations routières des informations de recherche d'itinéraire chevauche avec les informations de l'entourage associées,
un dispositif de sélection pour sélectionner la partie chevauchante des informations cartographiques additionnelles qui correspondent aux nouvelles informations routières,
un dispositif de transmission pour transmettre les informations cartographiques additionnelles, qui ont été sélectionnées par le dispositif de sélection, au dispositif de navigation.

2. Dispositif de traitement d' informations cartographiques selon la revendication 1,
**caractérisé en ce que**
le dispositif de traitement d' informations cartographiques en outre comprend le suivant:
un dispositif de calcul des frais de voyage pour calculer les frais de voyage occasionnés lorsqu' un corps en mouvement se déplace entre des endroits prédéterminés dans les nouvelles informations routières,
dans lequel
les informations de l'entourage associées sont réglées de telle sorte que celles-ci se rapportent aux frais de voyage qui sont calculés par le dispositif de calcul des frais de voyage.

3. Dispositif de traitement d' informations cartographiques selon l'une quelconque des revendications 1 à 2,
**caractérisé en ce que**
le dispositif de traitement d' informations cartographiques en outre comprend le suivant:
un dispositif de calcul de comparaison pour effectuer un calcul d'une comparaison entre les frais de voyage occasionnés lorsqu' un corps en mouvement se déplace entre des endroits prédéterminés dans les nouvelles informations routières, qui sont basées sur les informations cartographiques, et les frais de voyage occasionnés lorsque le corps en mouvement se déplace entre des endroits prédéterminés dans les nouvelles informations routières, qui sont basées sur les informations cartographiques additionnelles,
dans lequel
les informations de l'entourage associées sont réglées de telle sorte que celles-ci se rapportent aux frais de voyage qui sont calculés par le dispositif de calcul de comparaison.

4. Dispositif de traitement d' informations cartographiques, **caractérisé en ce que**
le dispositif de traitement d' informations cartographiques comprend le suivant:
le dispositif de traitement d' informations cartographiques selon l'une quelconque des revendications 1 à 3, et
le dispositif de navigation qui comprend le suivant:
un dispositif de recherche d'itinéraire pour effectuer une recherche d'itinéraire,
un dispositif de transmission et de réception pour transmettre ou recevoir les informations cartographiques additionnelles et les informations de recherche d'itinéraire du dispositif de recherche d'itinéraire, et
un dispositif de mémorisation des informations cartographiques additionnelles pour mémoriser les informations cartographiques additionnelles reçues par le dispositif de transmission et de réception.

5. Dispositif de traitement d' informations cartographiques selon la revendication 4,
dans lequel le dispositif de navigation comprend le suivant:
un dispositif d'affichage pour afficher des informations de recherche d'itinéraire qui sont obtenues par le dispositif de recherche d'itinéraire, et
le dispositif d'affichage affichant des informations de recherche d'itinéraire qui sont recherchées par le dispositif de recherche d'itinéraire sur la base des informations cartographiques qui contiennent les informations cartographiques additionnelles reçues par le dispositif de transmission et de réception.

6. Procédé de commande pour un dispositif de traitement d' informations cartographiques,
**caractérisé en ce que**
le procédé de commande pour le dispositif de traitement d' informations cartographiques comprend le suivant:
un processus de mémorisation pour mémoriser des informations cartographiques additionnelles qui contiennent de nouvelles informations routières,
un processus de réception pour recevoir des informations routières indicatives d'un itinéraire recherché par un dispositif de navigation,
un processus de réglage pour régler des informations de l'entourage associées qui se rapportent à de nouvelles informations routières des informations cartographiques additionnelles dans les informations cartographiques,
un processus de jugement pour déterminer si une partie des informations routières des informations de recherche d'itinéraire chevauche avec les informations de l'entourage associées,
un processus de sélection pour sélectionner la partie chevauchante des informations cartographiques additionnelles qui correspondent aux nouvelles informations routières, et
un processus de transmission pour transmettre les informations cartographiques additionnelles, qui ont été sélectionnées dans le processus de sélection, au dispositif de navigation.

7. Programme de commande pour un dispositif de traitement d' informations cartographiques,
**caractérisé en ce que**
le programme de commande incite un ordinateur étant compris dans le dispositif de traitement d' informations cartographiques à réaliser et exécuter les fonctions suivantes:
dispositif de mémorisation pour mémoriser des informations cartographiques additionnelles qui contiennent de nouvelles informations routières,
dispositif de réception pour recevoir des informations routières indicatives d'un itinéraire recherché par un dispositif de navigation,
processus de réglage pour régler des informations de l'entourage associées qui se rapportent à de nouvelles informations routières des informations cartographiques additionnelles dans les informations cartographiques,
processus de jugement pour déterminer si une partie des informations routières des informations de recherche d'itinéraire chevauche avec les informations d'entourage associées,
processus de sélection pour sélectionner la partie chevauchante des informations cartographiques additionnelles qui correspondent aux nouvelles informations routières, et
processus de transmission pour transmettre les informations cartographiques additionnelles, qui ont été sélectionnées par le dispositif de sélection, au dispositif de navigation.

8. Support d'enregistrement sur lequel le programme de commande pour un dispositif de traitement d'informations cartographiques selon la revendication 7 est enregistré de telle façon que celui-ci soit lisible par un ordinateur.
